# EUROPEAN PATENT APPLICATION

(11) **EP 4 667 824 A1**
(43) Date of publication of application: **24.12.2025**
(21) Application number: 24020211.9
(22) Date of filing: 20.06.2024
(51) Int. Cl.: F23D 11/38, F23D 14/78, F23R 3/28, F23D 14/48

(54) **A PARTING SHEET FOR A BURNER AND METHOD FOR MANUFACTURING THE SAME**

(71) Applicant: Linde GmbH, 82049 Pullach (DE); Selas-Linde GmbH, 82049 Pullach (DE)
(72) Inventor: Aumann, Martin, 82049 Pullach (DE); Murer, Martin, 82049 Pullach (DE); Schatz, Kati, 82049 Pullach (DE); Stadler, Martin, 89049 Pullach (DE); Ulmer, Sebastian, 82049 Pullach (DE); Mehanovic Dino, 82049 Pullach (DE); Sharma, Deepankar Virendra, 82049 Pullach (DE); Stefanescu, Adriana, 82049 Pullach (DE); Neuner, Fabian, 82049 Pullach (DE)
(74) Representative: Lu, Jing

(57) **Abstract**

The present invention relates to a parting sheet (1200) for a burner (1000), to a burner and to methods of manufacturing the same, wherein the parting sheet (1200) is configured to be arranged in or to be manufactured in a cavity (1120) inside a wall (1110) of the burner (1000) for flowing a cooling fluid through the wall of the burner, the parting sheet (1200) comprising a sheet element (1210) and a number of baffle elements (1220, 1230, 1240), wherein each of these baffle elements (1220, 1230, 1240) is provided at a predetermined position on a surface of the sheet element (1210) inclined by a predetermined angle (1221, 1231) towards the sheet element.

## Description

The present invention relates to a parting sheet for a burner and to a burner comprising a parting sheet as well as to a method for manufacturing a parting sheet and to a method of manufacturing a burner.

### Background of the invention

Burners or feed injectors can for example be used for a partial oxidation process of a fuel comprising hydrocarbons, e.g. natural gas, residual oil, coal etc., using an oxidant or an oxygen-comprising fluid, e.g. air, pure oxygen or a mixture thereof. A corresponding burner can comprise one or several annular channels for supplying one or several fluids of that kind. In order to cool the burner during the combustion process, the burner can comprise a cooling jacket, wherein a cavity is provided inside a wall of the burner as a channel or cooling channel for flowing or conducting a cooling fluid, e.g. water, through the corresponding burner wall. A parting sheet can be provided inside this cavity in order to separate the channel into a feed channel and a return channel. Such parting sheets may also be referred to as separating plates or sheets or as partition plates.

The velocity of the cooling fluid in the gap between the parting sheet and the cooling channel enclosure can be determined by the available cooling fluid flow and the given gap size. A certain minimum gap size should usually not be undershot to avoid plugging from small particles in the cooling fluid or minor geometric deviations from burner manufacturing or burner assembly. Local plugging can lead to hot spots on the burner and possibly to burner failure, which can lead to unnecessary down time. The gap size usually should not be too large either, because a large gap can lower the cooling fluid velocity at a given mass flow, since the heat transfer coefficient is proportional to the fluid velocity. Simply increasing the fluid flow and hence the velocity of the cooling fluid at given gap size can however increase the capital expenditure (CAPEX) and the operating expense (OPEX) of the cooling system.

It is desirable to provide an improved parting sheet for a burner.

### Disclosure of the invention

The present invention relates to a parting sheet (also referred to as separating plates or sheets or as partition plates) for a burner and to a burner as well as to a method for manufacturing a parting sheet and to a method of manufacturing a burner with the features of the independent claims. Embodiments and advantages form the subject-matter of the dependent claims and of the subsequent description. Advantages and embodiments of the parting sheet according to the invention, of the burner according to the invention, and of the methods according to the invention shall arise from the present description in an analogous manner.

The parting sheet is configured to be arranged in a cavity inside a wall of the burner. For this purpose, the parting sheet can be manufactured separately and independently from the burner. The correspondingly manufactured parting sheet can then be arranged or placed inside the cavity of the burner wall. Alternatively, the parting sheet is configured to be manufactured in the cavity. For this purpose, the burner wall and the parting sheet can expediently be manufactured together in a common manufacturing process. The cavity in the burner wall is especially provided as a channel or cooling channel for flowing or directing or conducting a cooling fluid, e.g. water, through the wall of the burner. The burner wall with the cavity or channel is particularly provided as a cooling jacket of the burner. By means of the parting sheet, the channel is expediently separated into a feed channel and a return channel.

The parting sheet comprises a number of baffle elements configured to influence, affect or adapt a fluid flow of the respective cooling fluid, especially to create a swirl of the fluid flow. Each of these baffle elements is provided at a predetermined position on a surface of the sheet element inclined by a predetermined angle towards the sheet element.

The present invention further relates to a method for manufacturing an embodiment of a parting sheet of the present invention and to a method for manufacturing an embodiment of a burner of the present invention.

According to the present invention, the sheet element of the parting sheet and the number of baffle elements are manufactured by means of suitable manufacturing processes as explained below, wherein each of these baffle elements is manufactured at a predetermined position on a surface of the sheet element inclined by a predetermined angle towards the sheet element. The parting sheet comprises the sheet element and the number of baffle elements manufactured as described above.

The sheet element and the baffle elements can be manufactured by means of an expedient manufacturing process, for example by means of a casting process. Particularly, the element and the baffle elements can be manufactured by means of an additive manufacturing process. Additive manufacturing, often also referred to as "3D printing", is a manufacturing process in which a three-dimensional object is created layer by layer by consecutively adding a material. In this process, a new layer of material is successively applied to the previously created object, solidified and firmly bonded to the underlying layers, e.g. with the aid of a laser, electron beam or electric arc. After one layer has been created, the next layer can be created in an analogous manner.

The additive manufacturing process can for example comprise an arc direct energy deposition (arc-DED), also referred to as wire and arc additive manufacturing (WAAM). In the course of this arc-DED or WAAM process, the individual layers of the parting sheet can be created using a consumable wire and an arc. For this purpose, welding torches, for example for gas shielded metal arc welding, e.g. for metal inert gas welding (MIG), metal active gas welding (MAG), or plasma welding, can be used, with an arc burning between the welding torch and the workpiece to be manufactured. The material is continuously fed in the form of a wire or strip and melted by the arc. During this process, molten droplets are formed which are transferred to the workpiece to be produced and firmly bonded to it. The material can be fed to the welding torch, for example, as a consumable wire electrode, with the arc burning between this wire electrode and the workpiece. It is also conceivable to supply the material in the form of an additional wire which is melted by the arc of the welding torch.

It is also possible to use alternative or additional additive manufacturing processes, e.g. wherein the individual layers of the parting sheet can be created by applying the respective material for example in powder form or in the form of wires or strips, and subjecting it to a laser and/or electron beam. The material can be subjected in this way to a sintering or melting process, for example, in order to be solidified. After one layer has been created, the next layer can be created in an analogous manner. Such additive manufacturing processes can for example include selective laser sintering (SLS), selective laser melting (SLM), electron beam melting (EBM), stereolithography (SL) or fused filament fabrication (FFF), powder bed fusion or laser powder bed fusion (LPBF) etc.

By means of the additive manufacturing process, the parting sheet can be manufactured as an integral, one-piece part in an easy, cost effective and time effective manner. The parting sheet can expediently be manufactured to have a reduced or minimised stiffness. The additive manufacturing process particularly allows to easily, individually and precisely adjust geometric properties such that the parting sheet can be fitted into the small geometry of the corresponding cooling channel and such that excessive mechanical stresses can be avoided. Further, the additive manufacturing process expediently allows to manufacture the various baffle elements as large but thin structures with high geometric accuracy. The additive manufacturing process further allows to manufacture an individually designed, custom-made parting sheet, also in small quantities or even as a single-item production.

The present invention is especially based on the finding that providing baffle elements, particularly additively manufactured baffle elements, at specifically predetermined positions inclined by specifically predetermined angles towards the basic sheet element of the parting sheet yields distinct advantages and allows to manufacture a parting sheet with high geometric accuracy, specifically tailored for the corresponding burner wall cavity, able to withstand stresses during burner operation. In particular, the inventors realised that a straightforward, conventional application of an additive manufacturing process for manufacturing a parting sheet with baffles may not be applicable because of unsupported structures in a classical design with perpendicular baffles. However, the inventors realised that manufacturing the baffle elements with specific angles towards the sheet element avoids the need of support structures and allows to specifically influence the cooling fluid flow inside the burner wall cavity such that an optimum cooling of the burner wall can be achieved and such that mechanical stresses can be reduced or minimised. The baffle elements expediently allow creating a swirl flow of the cooling fluid in the cooling channel, particularly wherein a big size of the gap between the parting sheet and the burner wall can be maintained while keeping the fluid flow rate low.

The parting sheet according to the invention expediently allows an improved cooling of the burner wall. A low wall temperature because of increased cooling performance can increase the burner lifetime. The additively manufacturing process expediently has reduced effects of manufacturing tolerances on cooling performance. Further, smaller cooling system can be provided for same burner size.

The present invention further relates to a burner comprising a wall and an embodiment of a parting sheet according to the invention. A cavity is provided inside the wall for flowing a cooling fluid through the wall of the burner. The parting sheet comprising the baffle elements is arranged in the cavity inside the wall of the burner with a predetermined distance to the wall of the burner.

It is to be understood that this distance between the parting sheet and the burner wall can vary and does not have to be constant along the parting sheet. For example, at different, individual positions of the parting sheet, the predetermined distance can have different, individual values. Particularly, the distance between the parting sheet and the burner wall has always a value above zero, such that the parting sheet does not come in contact with the wall of the burner.

Expediently, the baffle elements can individually be provided with high geometric accuracy such that the baffle elements and thus the parting sheet does not come in contact with the burner wall during operation of the burner even when the burner grows or shrinks locally due to heat loads imposed. Therefore, local stresses on the burner wall due to the burner wall coming in contact with the parting sheet can expediently be avoided. This contactless approach can expediently avoid local plastic deformation exceeding an allowable limit and can expediently be achieved using the additive manufacturing process since the local length of the various baffles can be specified individually and manufactured with high accuracy.

Alternatively, the parting sheet comprising the baffle elements is manufactured in the cavity inside the wall of the burner. The additive manufacturing process can expediently allow to easily manufacture the parting sheet inside the cavity with low effort and low costs. Particularly, the burner wall and the parting sheet with the baffle elements can be manufactured together in a common manufacturing process, e.g. by means of casting or by means of an additive manufacturing process, thereby reducing the manufacturing costs of the burner.

The parting sheet can be manufactured such that the baffle elements are connected with the wall of the burner or such that there is a predetermined distance between each baffle element and the burner wall. Manufacturing the sheet element with the baffle elements in contact with the burner wall can for example allow to easily and flexibly create internal flow channels inside the burner wall. The baffle elements touching the burner wall can for example result in a higher stiffness and better mechanical properties of the burner tip. Further, the baffle elements can expediently allow to reduce or minimise a flow rate of the cooling fluid, thereby reducing operation costs. Cooling can be improved and lifetime of the burner can be increased.

The present invention further relates to a method for manufacturing a burner. In the course of this manufacturing process, a wall is provided with a cavity or channel for flowing a cooling fluid through the wall. A parting sheet is manufactured according to an embodiment of a method of the present invention. The correspondingly manufactured parting sheet comprising the baffle elements is arranged in the cavity inside the wall of the burner with the predetermined distance to the wall of the burner.

Alternatively, the wall is manufactured with the cavity and the parting sheet is manufactured in the cavity. The burner wall and the parting sheet can therefore be manufactured together, e.g. in a common additive manufacturing process. The burner wall and the parting sheet can e.g. firmly be connected or there can be a predetermined distance between each baffle element and the burner wall.

After arranging or manufacturing the parting sheet in the cavity, the cavity can e.g. be connected with a corresponding fluid supply. The burner can then be operated and a corresponding cooling fluid can be directed through the cavity alongside the parting sheet. This cooling fluid flow can be influenced by means of the various baffle elements in order to achieve an optimum cooling of the burner wall.

It is to be understood that the burner can comprise further elements. For example, the burner can comprise several walls in order to form a multitude of annular channels for supplying the various fluids, e.g. a hydrocarbon-comprising fuel, e.g. natural gas, residual oil, coal etc., and an oxygen-comprising fluid, e.g. air, oxygen or a mixture thereof. One or several of these walls can comprise a corresponding cavity as cooling channel with a corresponding parting sheet. Particularly, an outer wall or outermost wall of the burner comprises a corresponding channel with a corresponding parting sheet.

For example, each predetermined angle can be an acute angle, particularly an angle less than 75°, particularly less than 60°, particularly less than 50°, particularly less than 45°, formed between a baffle element and the part of the sheet element, which extends from the baffle element to a tip or front end of the parting sheet. This front end of the parting sheet particularly corresponds to a tip or front end of the burner when the parting sheet is arranged inside the wall cavity. Acute angles of that kind expediently avoid the need of support structures. The correspondingly inclined baffle elements can easily be manufactured with high accuracy, e.g. by means of the additive manufacturing process. Further, the predetermined angle can particularly have a value of 0° or at least essentially 0°.

It is expediently possible to provide a first number of first baffle elements and a second number of second baffle elements, wherein each of these first baffle elements is provided at a predetermined first position on the surface of the sheet element inclined by a predetermined first angle and wherein each of these second baffle elements is provided at a predetermined second position on the surface of the sheet element inclined by a predetermined second angle. The predetermined second angles can expediently be different form the first angles. Providing two different kinds of baffle elements with different inclination angles towards the surface of the sheet element expediently allows to specifically influence the fluid flow in order to improve cooling of the burner, particularly to achieve efficient cooling of the burner tip.

For example, each of the first predetermined angles can be an acute angle, particularly less than 75°, as explained above. Each predetermined second angle can particularly be larger than each of the first angles. For example, each predetermined second angle can be in the range between 75° and 105°, particularly in the range between 80° and 100°, particularly in the range between 85° and 95°, particularly 90° or at least essentially 90°, formed between a baffle element and the part of the sheet element, which extends from the baffle element to a tip or front end of the parting sheet. The first baffle elements are expediently inclined by a much smaller first angle, particularly 45° or less, wherein the second baffle elements are inclined by a much larger angle, especially perpendicular or at least essentially perpendicular to the surface of the sheet element.

According to an embodiment, at least a part of the parting sheet and at least a part of the burner are manufactured by means of a common manufacturing process, particularly by means of a common additive manufacturing process, in order to manufacture the parting sheet in the cavity inside the wall of the burner. This part of the burner can expediently define or form the cavity. For example, the respective part of the burner can comprise a part of the wall, e.g. an inner wall. The respective part of the burner can expediently also be provided as the entire burner wall with the cavity. These commonly manufactured parts of the parting sheet and the burner can then expediently be assembled with remaining parts of the burner. These remaining parts can particularly be manufactured by means of a different manufacturing process, e.g. by means of a casting process.

According to an embodiment, the parting sheet comprises a cylindrical section, wherein corresponding baffle elements are provided on a surface of the sheet element in this cylindrical section. Alternatively, or additionally, the parting sheet comprises a conical section, wherein corresponding baffle elements are provided on a surface of the sheet element in this conical section. Expediently, the conical section is adjoining the cylindrical section. Particularly, firstly, this cylindrical section of the sheet element is manufactured, e.g. by means of the additive manufacturing process, and corresponding baffle elements are manufactured on a surface of the sheet element in this cylindrical section, e.g. by means of the additive manufacturing process. Secondly, the conical section of the sheet element adjoining the cylindrical section is manufactured, e.g. by means of the additive manufacturing process, and corresponding baffle elements are manufactured on a surface of the sheet element in this conical section, e.g. by means of the additive manufacturing process. This cylindrical section of the sheet element is expediently configured to be arranged inside a corresponding cylindrical section of the burner wall. The conical section of the sheet element is expediently configured to be arranged inside a corresponding conical section of the burner wall particularly corresponding to a tip of the burner. The baffle elements are expediently inclined with respect to a manufacturing direction of the additive manufacturing process, allowing to easily and accurately manufacture the baffle elements with the corresponding angles without the need of support structures.

According to an embodiment, the sheet element comprises a first surface or inner surface and a second surface or outer surface opposite to the corresponding first surface. Expediently, when the parting sheet is arranged inside the wall cavity, the corresponding first surface faces towards the inside of the burner and the corresponding second surface faces towards the outside of the burner. In the cylindrical section of the sheet element, the corresponding baffle elements having a first predetermined angle are provided on the first surface and on the second surface of the sheet element, i.e. both on the inner surface and on the outer surface of the sheet element. In the conical section of the sheet element, such baffle elements with first predetermined angles are provided only on the first, inner surface of the sheet element, but not on the second, outer surface. Each of these first predetermined angles is particularly an acute angle. A long narrow gap between the parting sheet and the burner wall can affect the cooling fluid flow by increasing the wake at the edge at the burner tip, which can lead to locally reduced cooling at the burner tip. To mitigate this effect, the baffle elements particularly with small acute angles are provided manufactured in the conical section only at the inner side of the parting sheet, where the cooling fluid particularly flows back and thus has already passed the critical tip region. Therefore, no baffle elements inclined by such first predetermined, particularly small acute angles are provided at the outer surface of the sheet element in the conical section, i.e. in the section where the cooling fluid flows directly towards the burner tip, which improves the cooling of the burner tip.

According to an embodiment, on the second, outer surface of the sheet element in its conical section, the corresponding baffle elements are provided each inclined by a predetermined second angle. These second angles are particularly larger than the first angles, expediently 75° or larger. The inventors found that baffle elements with acute angles, especially 45° or less, on the outer surface in the conical section of the sheet element can result in a large basement of the corresponding blade and can increase the burner wall temperature locally. The inventors further found that providing baffle elements with second inclination angles, especially perpendicular or at least essentially perpendicular to the sheet element surface, only on the outer sheet element surface in the conical section and providing baffle elements with acute angles, especially 45° or less, on the inner sheet element surface in the conical section as well as on the inner and outer sheet element surface in the cylindrical section yields a particularly efficient cooling fluid flow and allows a particularly efficient cooling of the burner wall.

According to an embodiment, a thickness of the corresponding baffle elements provided on the surface of the sheet element in the cylindrical section is larger than a thickness of the corresponding baffle elements provided on the surface of the sheet element in the conical section. Particularly, the thickness of the corresponding baffle elements in the cylindrical section can be at least two times the thickness of the baffle elements in the conical section, especially at least five times, especially at least ten times. The baffle elements can expediently be provided in order to transfer forces, particularly when connected with the burner wall. High stress in the burner tip can be caused by two different forces, especially by differences in thermal elongation of an inner and an outer side of the burner and by pressure differences between the combustion process and the cooling fluid system. The baffle elements, particularly when connected with the burner wall, can be provided in order to counteract these forces, resulting in lower stress at the burner tip. Expediently, the thickness of the baffle elements in the cylindrical section can be significantly increased with respect to the thickness of the baffle elements in the conical section such that these baffle elements with increased thickness can transfer forces caused by differences in thermal elongation. The baffle elements in the conical section with the smaller thickness can especially act as columns supporting the surface of the burner wall from high-pressure differences between the combustion process and the cooling fluid. Further, the baffle elements both in the cylindrical section and in the conical section can act as fins providing increased heat transfer surface. Better heat transfer can lead to lower temperature and more homogeneous temperature distribution and can thereby reduce uneven thermal elongation. Further, lower stress at the burner tip allows for lower wall thickness at this location. Optimising the material thickness of the burner can reduce the outer metal temperature, which can lead to significantly reduced damage by metal dusting, e.g. when the temperature is shifted below a critical metal dusting temperature range of e.g. 550°C to 700°C. Thereby, the burner lifetime can significantly be improved.

According to an embodiment, the predetermined position and/or the predetermined angle of each baffle element are determined in order to influence a flow property of the cooling fluid flowing in the cavity in a predetermined manner. By influencing this flow property, the cooling fluid flowing through the wall of the burner and thereby the cooling efficiently can particularly be influenced. In particular, the predetermined positions and/or angles are determined in order to influence a velocity, especially a circumferential velocity, of the cooling fluid flowing in the cavity in a predetermined manner. A variation of the corresponding angles of the baffle elements expediently corresponds directly to a variation of the fluid velocity. For example, the additive manufacturing process yields an additional design freedom, which allows to vary the circumferential velocity along the flow path. The velocity can especially be increased by corresponding baffle elements before regions with high cooling demand. A region with especially high cooling demand is for example the burner front end. The cooling at critical regions can therefore be improved by increasing the cooling flow velocity at these critical regions, which can increase the lifetime of the burner.

According to an embodiment, the predetermined position and/or the predetermined angle of each baffle element are predetermined such that the (circumferential) velocity of the fluid flowing in the cavity increases towards a front end of the sheet element. The front end of the parting sheet particularly corresponds to the front end of the burner, which can have a high cooling demand. With increased velocity at the burner front end, this high cooling demand can be met.

According to an embodiment, at least one baffle element of the number of baffle elements is provided as a guiding and/or supporting element at a predetermined guiding and/or supporting position on the surface of the sheet element inclined by a predetermined guiding and/or supporting angle towards the sheet element. The respective guiding and/or supporting position expediently corresponds to the above referenced predetermined position of the respective baffle element. The respective guiding and/or supporting angle expediently corresponds to the above referenced predetermined angle of the respective baffle element. Particularly, these guiding and/or supporting elements can be provided as guiding vanes for guiding or influencing a flow reversal of the cooling fluid, especially between the feed channel and the return channel in the cavity. Alternatively, or additionally, the guiding and/or supporting elements can particularly be provided as supporting structures for the manufacturing process. Expediently, one or several of the baffle elements are each provided as a respective guiding and/or supporting elements. It is also possible that all of the baffle elements are each provided as a respective guiding and/or supporting elements. For example, the parting sheet can comprise only respective guiding and/or supporting elements for guiding or influencing the flow reversal of the cooling fluid, e.g. provided at a front end or tip of the parting sheet.

According to an embodiment, the respective predetermined guiding and/or supporting position corresponds to a reversal position of fluid flow reversal in the cavity, particularly to a position at a front end of the sheet element. Alternatively, or additionally, the respective predetermined guiding and/or supporting angle is determined in order to influence a flow property in the cavity, in particular a velocity of the cooling fluid following in the cavity, in a predetermined manner. Therefore, the velocity of the cooling fluid at the point of flow reversal next to the burner front face can expediently be influenced by the guiding and/or supporting elements in order to achieve an effective cooling.

According to an embodiment, the respective guiding and/or supporting element is provided as a support structure for manufacturing the parting sheet in the cavity inside the burner wall. Particularly, the respective guiding and/or supporting elements at the front end of the sheet element and therefore next to the burner front face can especially also act as support structures, which can be required for additive manufacturing of the burner tip. Support structures of that kind can usually not be removed easily after the manufacturing process because of the limited accessibility of the area. However, the guiding and/or supporting elements for guiding or influencing the cooling fluid can particularly also act as a support structure during the manufacturing process, particularly the additive manufacturing process, especially the common additive manufacturing process of the burner wall and the parting sheet, such that costs and effort of the manufacturing process can be reduced. Using the support structures as an integral part of the burner design can particularly avoid post treatment to remove the support structures, can lead to high resistance to forces and increased stiffness, and can result in a lower required burner wall thickness, which can be beneficial for metal temperature and thereby for corrosion resistance and metal dusting resistance and which can lead to little or no creeping.

According to an embodiment, the respective guiding and/or supporting element can be provided as a spacer element or distance element, expediently provided at a predetermined spacer position on the surface of the sheet element, configured to position the parting sheet in the cavity relative to the wall, particularly when the parting sheet and the burner wall are not manufactured together in a common manufacturing process. For example, vertical spacer elements can be provided at the tip or front end of the sheet element, which can allow correct axial positioning of the parting sheet during assembly. Expediently, the guiding and/or supporting elements provided as spacer elements allow positioning such that the parting sheet does not come in contact with the burner wall even when the burner grows or shrinks during operator due to heat loads. As the parting sheet expediently remains cold while the outer jacket is likely to expand due to the high temperature, a contact of the respective guiding and/or supporting element elements and the jacket is particularly unlikely to occur during burner operation. This contactless approach for the parting sheet particularly allows avoiding local plastic deformation exceeding an allowable limit.

According to an embodiment, the respective guiding and/or supporting element has a cylindrical form or at least essentially a cylindrical form. Particularly, cylindrical elements with a round cross section can yield smaller, reduced wakes e.g. when compared with cuboid elements with squared cross sections.

According to an embodiment, the respective predetermined guiding and/or supporting position is a position at the tip or front end of the sheet element, such that the guiding and/or supporting elements provided as spacer elements can especially help position and align the parting element correctly with respect to the burner tip.

According to an embodiment, the parting sheet is manufactured from one or several of the following materials: stainless steel 1.4571 ; alloy 699 XA; alloy 602 CA; alloy 718; alloy 690 XA. When manufacturing the parting sheet separately, an inexpensive material, like stainless steel can be used. When manufacturing the burner wall together with the parting sheet in a common manufacturing process, a more expensive, higher-grade alloy can be used, e.g. one or several of the alloys 699 XA, 602 CA, 718, or 690 XA. Alloy 699 XA (Euronorm designation: 2.4842; Unified Numbering System (UNS) designation: N06699) is a nickel-chromium-aluminium alloy with high metal dusting resistance. Alloy 602 CA (Euronorm designation: 2.4633; UNS designation: N06025) is a high carbon chromium-iron-nickel alloy with high resistance to oxidation at high temperature and with high metal dusting resistance. Alloy 718 (Euronorm designation: 2.4668; UNS designation: N07718) is a high-strength, corrosion-resistant nickel chromium alloy. Alloy 690 (Euronorm designation: 2.4642; UNS designation: N06690) is a high-chromium nickel alloy with high resistance to many corrosive aqueous high-temperature atmospheres and high resistance to metal dusting, oxidation and sulfidation at high temperature.

According to an embodiment, a fluid flow analysis is performed, especially comprising a computational fluid dynamics (CFD) analysis and/or a finite element (FE) analysis, in order to determine the number, position and angle of each baffle element, further especially in order to determine the number, guiding and/or supporting position and guiding and/or supporting angle of each guiding and/or supporting element, further especially in order to determine the number and spacer position of each spacer element. By means of this fluid flow analysis, a fluid flowing through the cavity inside the wall of the burner along the parting sheet can be simulated and evaluated. It can especially be evaluated how different parting sheets with different baffle elements influence the fluid flow, especially the (circumferential) velocity of the fluid, in order to determine an optimised number, position and angle for the baffle elements such that the fluid flow can be influenced in an optimum manner and such that an optimum cooling is possible. For example, by means of the CFD analysis, the temperature distribution in the metal parts of the burner can be determined. With this accurate temperature distribution, the FE analysis can be performed in order to evaluate the local deformation of the burner wall at the burner tip.

Computational fluid dynamics (CFD) utilises numerical analysis to simulate and analyse the fluid flow and to solve given problems. Interaction of the fluid flow with specific elements e.g. be defined by boundary conditions. A finite element (FE) analysis is a numerical method based on the numerical solution of a complex system of partial differential equations. An entire system is divided into a finite number of subsystems of simple form, i.e. finite elements, whose physical behaviour can be calculated on the basis of their simple geometry. In each of the finite elements, the partial differential equations are replaced by simple differential equations or by algebraic equations. The system of equations thus obtained is solved to obtain an approximate solution of the partial differential equations. The physical behaviour of the entire system is reproduced by predetermined continuity conditions during the transition from one element to the neighbouring element.

According to an embodiment, the manufactured parting sheet is arranged in the cavity inside the wall of the burner. Particularly, the corresponding spacer elements can be used for positioning and aligning the parting sheet relative to the burner wall. Alternatively, the parting sheet is directly manufactured in the cavity, particularly together with the burner wall, wherein the guiding and/or supporting elements can especially be used as support structures.

Further advantages and developments of the invention are specified in the description and the associated drawings.

It goes without saying, that the features named above and still to be explained below can be used not only in the combination indicated respectively, but also in other combinations or in a stand-alone manner, without going beyond the scope of the present invention.

The invention is illustrated schematically in the drawings on the basis of exemplary embodiments and will be described in detail in the following with reference to the drawings.

### Description of drawings

- Fig. 1: schematically shows an embodiment of a burner of the present invention comprising an embodiment of a parting sheet of the present invention in a sectional side view.
- Fig. 2: schematically shows an embodiment of a burner of the present invention comprising an embodiment of a parting sheet of the present invention in a sectional side view.
- Fig. 3: schematically shows an embodiment of a burner of the present invention comprising an embodiment of a parting sheet of the present invention in different views a) to d), wherein view a) shows the burner in a sectional side view and wherein the views b) to d) show elements of the burner of view a).

### Detailed description of the drawings

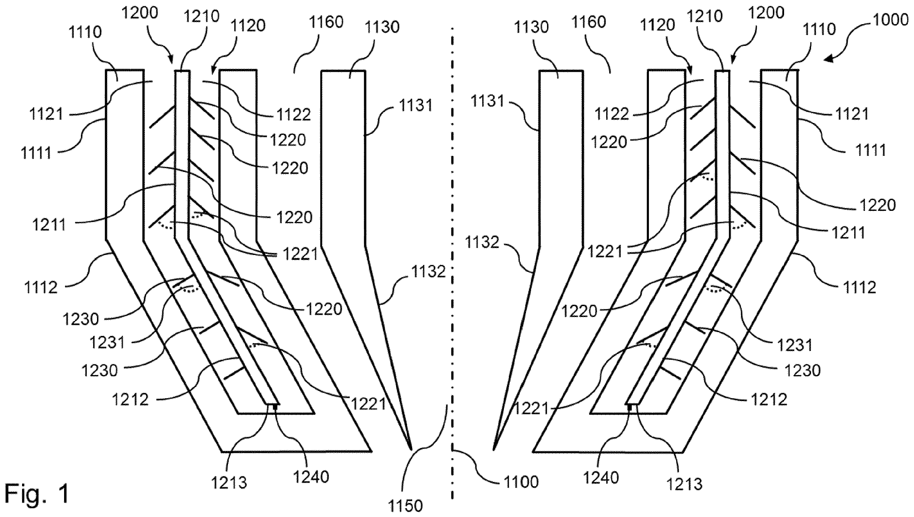

Fig. 1 schematically shows an embodiment of a burner 1000 of the present invention, manufactured according to an embodiment of a method of the present invention, in a sectional side view.

A central axis of the burner 1000 is referred to as 1100. The burner 1000 comprises an inner wall 1130 and an outer wall 1110, wherein these walls 1110, 1130 define different channels 1150, 1160 for supplying fluids. For example, a first, inner channel 1150 can be provided for supplying a hydrocarbon-comprising fuel, e.g. natural gas, residual oil, coal etc., and a second, outer channel 1160 can be provided for supplying an oxygen-comprising fluid, e.g. air, oxygen or a mixture thereof, or vice versa. The outer wall 1110 comprises a cylindrical section 1111 and a conical section 1112. Accordingly, also the inner wall 1130 comprises a cylindrical section 1131 and a conical section 1132. These conical sections 1112, 1132 corresponds to a tip of the burner 1000. The outer wall 1110 is provided as a cooling jacket, wherein a cavity 1120 is provided inside the wall 1110 as a cooling channel for flowing or conducting a cooling liquid, e.g. water, through the outer wall 1110.

An embodiment of a parting sheet 1200 of the present invention, manufactured according to an embodiment of the method of the present invention, is provided inside the cavity 1120 in order to separate the cooling channel 1120 into a feed channel 1121 and a return channel 1122. The parting sheet 1200 comprises a number of baffle elements 1220, 1230 in order to influence a fluid flow of the cooling fluid through the cooling channel 1120 such that an optimum cooling of the burner 1000 can be achieved.

The parting sheet 1200 comprising the baffle elements 1220, 1230 is arranged in the cavity 1120 inside the burner wall 1110 with a predetermined distance to the wall 1110. The specific value of this predetermined distance can vary along the parting sheet 1200, but is particularly always above zero, such that the parting sheet 1200 does not come in contact with the wall 1110 of the burner 1000. Therefore, the baffle elements 1220, 1230 and the other components of the parting sheet 1200 do not come in contact with the burner wall 1110 during operation of the burner 1000, even when the burner 1000 grows or shrinks locally due to heat loads imposed. Therefore, local stresses on the burner wall 1110 due to the burner wall 1110 coming in contact with the parting sheet 1200 can expediently be avoided. By means of this contactless approach, it can expediently be avoided that local plastic deformation exceeds an allowable limit.

The parting sheet 1200 can be manufactured by means of an expedient manufacturing process, for example by means of a casting process. Particularly, the parting sheet 1200 is manufactured by means of an additive manufacturing process, e.g. by means of an arc direct energy deposition (arc-DED) or wire and arc additive manufacturing (WAAM). The correspondingly manufactured parting sheet 1200 comprises a sheet element 1210 with a cylindrical section 1211 and a conical section 1212. A tip or front end of the sheet element 1210 is referred to as 1213.

The parting sheet 1200 comprises a first number of first baffle elements 1220, wherein each of these first baffle elements 1220 is provided at a predetermined first position on a surface of the sheet element 1210 inclined by a predetermined first angle 1221 towards the sheet element 1210.

Each of these first angles is an acute angle, particularly less than 75°, particularly less than 60°, particularly less than 50°, particularly less than 45° formed between a baffle element 1220 and the part of the sheet element 1210, which extends from the baffle element 1220 to the front end 1213 of the parting sheet 1200. In the present example, each first angle 1221 is particularly 45° or at least essentially 45°.

In the cylindrical section 1211 of the parting sheet 1200, these first baffle elements 1220 are provided both on an inner surface of the sheet element 1210, i.e. a surface facing towards the inside of the burner 1000 and facing towards the return channel 1122, and on an outer surface of the sheet element 1210, i.e. a surface facing towards the outside of the burner 1000 and facing towards the feed channel 1121. In the conical section 1212, first baffle elements 1220 are only provided on the inner surface of the sheet element 1210 but not on the outer surface of the sheet element 1210.

The parting sheet 1200 further comprises a second number of second baffle elements 1230, wherein each of these second baffle elements 1230 is provided at a predetermined second position on the surface of the sheet element 1210 inclined by a predetermined second angle 1231 towards the sheet element 1210. These second baffle elements 1230 are only provided on the outer surface of the sheet element 1210 in its conical section 1212.

Each of these second angles is generally larger than each of the first angles and is, in particular, in the range between 75° and 105°, particularly in the range between 80° and 100°, particularly in the range between 85° and 95° formed between a baffle element 1230 and the part of the sheet element 1210, which extends from the baffle element 1230 to the front end 1213 of the parting sheet 1200. In the present example, each second angle 1231 is particularly 90° or at least essentially 90°.

Providing the second baffle elements 1230 with second angles 1231 of essentially 90° on the outer surface of the sheet element 1210 in its conical section 1212, providing the first baffle elements 1220 with first angles 1221 of essentially 45° or less on the inner surface of the sheet element 1210 in its conical section 1212, and providing the first baffle elements 1220 with first angles 1221 of essentially 45° or less on both the inner surface and the outer surface of the sheet element 1210 in its cylindrical section 1211 yields a particularly efficient cooling fluid flow and allows a particularly efficient cooling of the burner wall. Further, the correspondingly inclined first and second baffle elements can easily and accurately be manufactured by means of the additive manufacturing process.

Further, one or several of the baffle elements are each provided as a guiding and/or supporting element 1240. For example, these guiding and/or supporting elements 1240 can be provided as spacer elements, wherein each of these spacer elements 1240 is provided at a predetermined spacer position on the front end 1213 of the sheet element 1210. These spacer elements 1240 are provided for positioning and aligning the parting sheet 1200 in the cavity 1120 relative to the outer burner wall 1110, particularly with the predetermined distance to the wall 1110. The spacer elements 1240 are provided such that these elements 1240 do not come in contact with the burner wall 1110 during burner operation, even when the burner 1000 grows or shrinks during operator due to heat loads. For example, each spacer element 1240 has a cylindrical or at least essentially cylindrical form with a round cross section, which can yield smaller, reduced wakes e.g. when compared to a cuboid shape with squared cross section.

The specific first position and the specific first angle 1221 of each first baffle element 1220 as well as the specific second position and the specific second angle 1231 of each second baffle element 1230 and the specific spacer position of each spacer element 1240 are determined by means of a fluid flow analysis, especially comprising a computational fluid dynamics (CFD) analysis and a finite element (FE) analysis. By means of this analysis, the specific cooling channel 1120 with its specific geometry and the specific cooling fluid flow through the channel 1120 can be simulated and evaluated. The interaction of different parting sheets with the fluid flow can be simulated and evaluated in order to determine an optimised number, position and angle for the baffle elements 1220, 1230 and the spacer elements 1240 such that the fluid flow can be influenced in an optimum manner and such that an optimum cooling is possible.

After determining these values, the parting sheet 1200 is manufactured by means of the additive manufacturing process or by means of another expedient manufacturing process like casting. First, the cylindrical section 1211 of the sheet element 1210 and the corresponding first baffle elements 1220 on the inner and outer surface of the sheet element 1210 are manufactured, e.g. by means of the additive manufacturing process. Afterwards, the conical section 1212 adjoining the cylindrical section 1211 of the sheet element 1210 and the corresponding first and second baffle elements 1220, 1230 on the respective inner and outer surface of the sheet element 1210 as well as the spacer elements 1240 on the front end of the sheet element 1210 are manufactured, e.g. by means of the additive manufacturing process. The correspondingly manufactured parting sheet 1200 is then arranged in the cavity 1120 inside the burner wall 1110 with the predetermined distance to the wall 1110. By means of the spacer elements 1240, the parting sheet 1200 is positioned and aligned with respect to the burner wall 1110.

The present invention therefore provides a possibility to easily manufacture the parting sheet 1200 with low effort, low costs and high geometric accuracy in order to specifically influence the cooling fluid flow and allow an optimum cooling of the burner wall 1110. The parting sheet 1200 can be manufactured with such accuracy, that its various baffle and spacer elements 1220, 1230, 1240 do not come in contact with the burner wall 1110 during burner operation. Local stresses and plastic deformation of the burner wall 1110 can be reduced or minimised. The parting sheet 1200 can for example be manufactured from an inexpensive material, like stainless steel 1.4571.

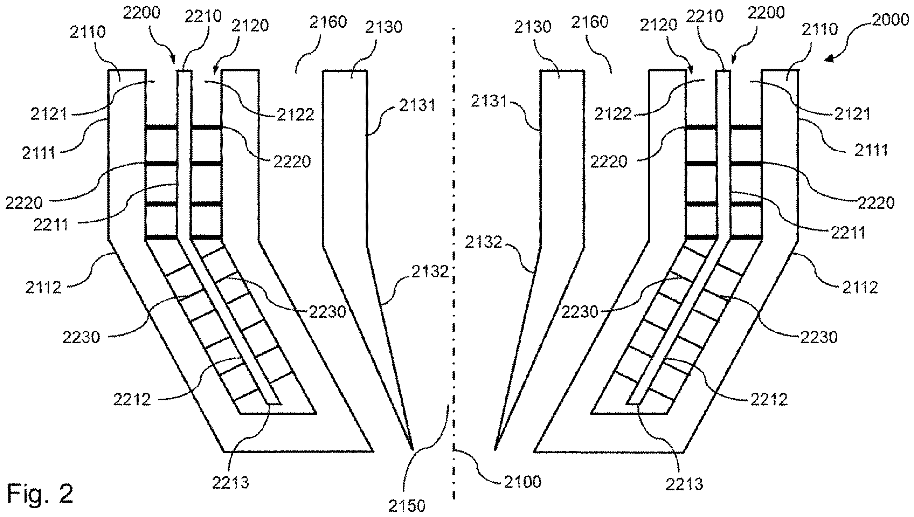

Fig. 2 schematically shows another embodiment of a burner 2000 of the present invention, manufactured according to another embodiment of a method of the present invention, in a sectional side view.

In accordance with the burner 1000 of Fig. 1, the burner 2000 shown in Fig. 2 comprises a central axis 2100 as well as an inner wall 2130 and an outer wall 2110 defining different channels 2150, 2160 for supplying fluids, wherein the outer wall 2110 comprises a cylindrical section 2111 and a conical section 2112 and wherein the inner wall 2130 comprises a cylindrical section 2131 and a conical section 2132. Inside the outer wall 2110 a cavity 2120 is provided as a cooling channel. An embodiment of a parting sheet 2200 of the present invention is provided inside the cavity 2120 in order to separate the cooling channel into a feed channel 2121 and a return channel 2122.

In contrast to the parting sheet 1200 of Fig. 1, the parting sheet 2200 shown in Fig. 2 is not manufactured separately from the burner wall 2110 and then arranged inside the cavity 2120, but the outer burner wall 2110 and the parting sheet 2200 are manufactured together in a common manufacturing process, e.g. in a common additive manufacturing process. For this purpose, the wall 2110 is manufactured with the cavity 2120 by means of an additive manufacturing process, e.g. by means of an arc direct energy deposition (arc-DED) or wire and arc additive manufacturing (WAAM), and the parting sheet 2200 is manufactured by means of this additive manufacturing process directly inside the cavity 2120.

When manufacturing the entire burner wall 2110 together with the parting sheet 2200, a more expensive, higher-grade material can be used, e.g. one or several of the alloys 699 XA, 602 CA, 718, or 690 XA.

The parting sheet 2200 comprises a sheet element 2210 and a number of baffle elements 2220, 2230, wherein each of these baffle elements 2220, 2230 is provided at a predetermined position on a surface of the sheet element 2210 inclined by a predetermined angle towards the sheet element. In this example, each of the baffle elements 2220, 2230 is inclined by an angle of essentially 90°. A tip or front end 2213 of the sheet element 2210 corresponds to a front end or front face of the burner 2000.

In contrast to the burner 1000 of Fig. 1, the baffle elements 2220, 2230 of the burner 2000 are connected with the outer burner wall 2110. Additively manufacturing the parting sheet 2200 directly in the cavity 2120 expediently allows to easily manufacture the baffle elements 2220, 2230 in direct contact with the burner wall 2110. The baffle elements 2220, 2230 being connected with the burner wall 2110 allows to create internal flow channels inside the burner wall 2110 and can result in a higher stiffness and better mechanical properties of the burner tip. Further, the baffle elements 2220, 2230 can expediently allow to reduce or minimise a flow rate of the cooling fluid, thereby reducing operation costs.

The sheet element 2210 comprises a cylindrical section 2211 and a conical section 2212, wherein a first number of the baffle elements 2220 is arranged at the cylindrical section 2211 and wherein a second number of the baffle elements 2230 is arranged at the conical section 2212. A thickness of the first baffle elements 2220 is larger than a thickness of the second baffle elements 2230, for example five times the thickness of the second baffle elements 2230. By the increased thickness of the first baffle elements 2220 in the cylindrical section 2211, these first baffle elements 2220 can transfer forces caused by differences in thermal elongation. The second baffle elements 2230 in the conical section 2212 with the smaller thickness can act as columns supporting the surface of the burner wall 2110 from high-pressure differences between the combustion process and the cooling fluid. Both the first and second baffle elements 2220, 2230 act as fins providing increased heat transfer surface.

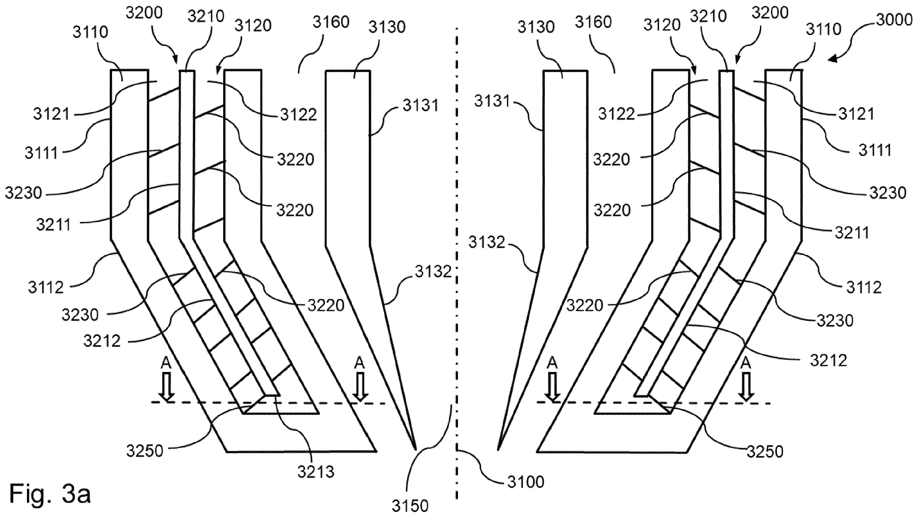

Fig. 3a schematically shows an embodiment of a burner 3000 of the present invention, manufactured according to an embodiment of a method of the present invention, in a sectional side view.

In accordance with the burners 1000 and 2000 shown in Fig. 1 and Fig. 2, the burner 3000 shown in Fig. 3a comprises a central axis 3100, an inner wall 3130 with a cylindrical section 3111 and a conical section 3112 as well as an outer wall 3110 with a cylindrical section 3111 and a conical section 3112. The walls 3130, 3110 define different channels 3150, 3160 for supplying fluids. The outer wall 3110 comprises a cavity 3120 as a cooling channel. An embodiment of a parting sheet 3200 of the present invention is provided inside the cavity 3120 in order to separate the cooling channel into a feed channel 3121 and a return channel 3122.

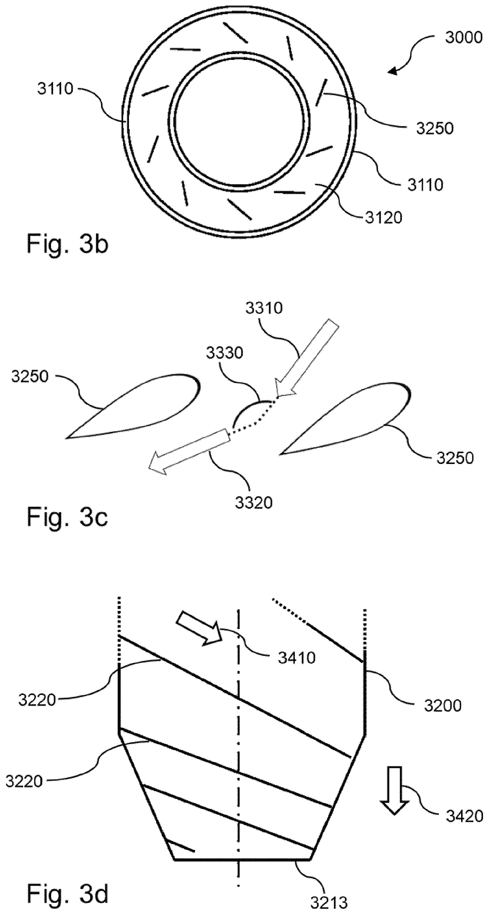

In accordance with the burner 2000 of Fig. 2, the outer wall 3110 and the parting sheet 3200 shown in Fig. 3 are manufactured together in a common manufacturing process, e.g. in a common additive manufacturing process, e.g. an arc direct energy deposition (arc-DED) or wire and arc additive manufacturing (WAAM), such that the parting sheet 3200 is manufactured directly inside the cavity 3120.

The parting sheet 3200 comprises a sheet element 3210 with a cylindrical section 3211 and a conical section 3212 as well as a number of baffle elements 3220, wherein each of these baffle elements 3220 is provided at a predetermined position on a surface of the sheet element 3210 inclined by a predetermined angle towards the sheet element 3210. The baffle elements 3220 are connected with the outer burner wall 3110.

Further, one or several of the baffle elements are each provided as guiding and/or supporting element 3250 at a predetermined guiding and/or supporting position on the surface of the sheet element 3210 inclined by a predetermined guiding and/or supporting angle towards the sheet element 3210. This guiding and/or supporting position corresponds to a position at a front end 3213 of the sheet element 3210 and therefore to a reversal position of fluid flow reversal in the cavity 3120. The guiding elements 3250 can be provided as guiding vanes for guiding or influencing the cooling fluid flow. Alternatively, or additionally, the guiding and/or supporting elements 3250 can be provided as a support structure for manufacturing the parting sheet 3200 in the cavity 3120.

Fig. 3b shows a sectional top view through the outer burner 3110 along the line A-A. Fig. 3b thus shows the various guiding and/or supporting elements 3250 positioned inside the cavity 3120 in the burner wall 3110. The guiding and/or supporting angle of the guiding elements 3250 is determined in order to influence a flow property of the cooling fluid flowing in the cavity 3120, in particular the velocity of the cooling fluid. The guiding elements 3250 are therefore particularly provided for influencing the flow reversal of the cooling fluid between the feed channel 3121 and the return channel 3122 in the cavity 3120, as shall be explained with reference to Fig. 3c.

Fig. 3c exemplarily shows two of the guiding and/or supporting elements 3250. A flow of cooling fluid upstream the guiding and/or supporting elements 3250 is indicated by the arrow 3310. A flow of cooling fluid downstream the guiding and/or supporting elements 3250 is indicated by the arrow 3320. Depending on the specific guiding angles of the guiding and/or supporting elements 3250, the flow direction of the cooling fluid can be amended by means of the guiding and/or supporting elements 3250 by an angle 3330, which can e.g. be in the range between 5° and 20°. The shape of the guiding and/or supporting elements 3250 shown in Fig. 3c is exemplary. Particularly, the guiding and/or supporting elements 3250 can have an expedient shape in order to influence flow direction and magnitude of the cooling fluid.

As shall now be explained with reference to Fig. 3d, the number, the predetermined position and the predetermined angle of each baffle element 3220 are determined in order to influence a flow property, in particular the velocity of the cooling fluid flowing in the cavity 3120 in a predetermined manner.

Fig. 3d shows the parting sheet 3200 with the baffle elements 3220 in a side view. Arrow 3410 represents the cooling fluid along the parting sheet 3200 in the feed channel 3121 of the cavity 3120. The number, the position and the angle of each baffle element 3220 are determined in order to influence the circumferential velocity of the cooling fluid flow 3410 in a predetermined manner, in particular such that the circumferential velocity increases along a direction 3420 from a back end towards the front end 3213 of the parting sheet 3200.

### List of reference signs

- 1000: burner
- 1100: central axis of the burner
- 1110: outer wall of the burner
- 1111: cylindrical section of the outer wall of the burner
- 1112: conical section of the outer wall of the burner
- 1120: cavity, cooling channel in the outer wall of the burner
- 1121: feed channel
- 1122: return channel
- 1130: inner wall of the burner
- 1131: cylindrical section of the inner wall of the burner
- 1132: conical section of the inner wall of the burner
- 1150: first channel
- 1160: second channel
- 1200: parting sheet
- 1210: sheet element
- 1211: cylindrical section of the sheet element
- 1212: conical section of the sheet element
- 1213: tip or front end of the sheet element
- 1220: first baffle element
- 1221: first predetermined angle
- 1230: second baffle element
- 1231: second predetermined angle
- 1240: spacer element

- 2000: burner
- 2100: central axis of the burner
- 2110: outer wall of the burner
- 2111: cylindrical section of the outer wall of the burner
- 2112: conical section of the outer wall of the burner
- 2120: cavity, cooling channel in the outer wall of the burner
- 2121: feed channel
- 2122: return channel
- 2130: inner wall of the burner
- 2131: cylindrical section of the inner wall of the burner
- 2132: conical section of the inner wall of the burner
- 2150: first channel
- 2160: second channel
- 2200: parting sheet
- 2210: sheet element
- 2211: cylindrical section of the sheet element
- 2212: conical section of the sheet element
- 2213: tip or front end of the sheet element
- 2220: first baffle element
- 2230: second baffle element

- 3000: burner
- 3100: central axis of the burner
- 3110: outer wall of the burner
- 3111: cylindrical section of the outer wall of the burner
- 3112: conical section of the outer wall of the burner
- 3120: cavity, cooling channel in the outer wall of the burner
- 3121: feed channel
- 3122: return channel
- 3130: inner wall of the burner
- 3131: cylindrical section of the inner wall of the burner
- 3132: conical section of the inner wall of the burner
- 3150: first channel
- 3160: second channel
- 3200: parting sheet
- 3210: sheet element
- 3211: cylindrical section of the sheet element
- 3212: conical section of the sheet element
- 3213: tip or front end of the sheet element
- 3220: baffle element
- 3250: guiding and/or supporting element
- 3310: fluid flow upstream the guiding and/or supporting elements
- 3320: fluid flow downstream the guiding and/or supporting elements
- 3330: angle between fluid flow upstream and downstream the guiding and/or supporting elements
- 3410: fluid flow along the parting sheet
- 3420: direction from back end towards front end of the parting sheet

## Claims

1. A parting sheet (1200, 2200, 3200) for a burner (1000, 2000, 3000), wherein the parting sheet (1200, 2200, 3200) is configured to be arranged in or to be manufactured in a cavity (1120, 2120, 3120) inside a wall (1110, 2110, 3110) of the burner (1000, 2000, 3000) for flowing a cooling fluid through the wall of the burner, the parting sheet (1200, 2200, 3200) comprising a sheet element (1210, 2210, 3210) and a number of baffle elements (1220, 1230, 1240, 2220, 2230, 3220, 3230, 3250),
wherein each of these baffle elements (1220, 1230, 1240, 2220, 2230, 3220, 3230, 3250) is provided at a predetermined position on a surface of the sheet element (1210, 2210, 3210) inclined by a predetermined angle (1221, 1231) towards the sheet element.

2. The parting sheet according to claim 1, wherein the parting sheet (1200) comprising the baffle elements (1220, 1230, 1240) is configured to be arranged in the cavity (1120) inside the wall (1110) of the burner (1000) with a predetermined distance to the wall (1110) of the burner (1000) or wherein the parting sheet (2200, 3200) comprising the baffle elements (2220, 2230, 3220, 3250) is configured to be manufactured in the cavity (2120, 3120) inside the wall (2110, 3110) of the burner (2000, 3000).

3. The parting sheet according to claim 2, wherein the parting sheet (1200, 2200, 3200) is configured such that at least a part of the parting sheet (1200, 2200, 3200) and at least a part of the burner (1000, 2000, 3000) are manufactured by means of a common manufacturing process, particularly by means of a common additive manufacturing process, in order to manufacture the parting sheet (2200, 3200) in the cavity (2120, 3120) inside the wall (2110, 3110) of the burner (2000, 3000).

4. The parting sheet according to any one of the preceding claims,
wherein the parting sheet comprises a cylindrical section (1211, 2211, 3211), wherein corresponding baffle elements (1220, 1230, 2220, 2230, 3220, 3230) are provided on a surface of the sheet element (1210, 2210, 3210) in this cylindrical section (1211, 2211, 3211); and/or
wherein the parting sheet comprises a conical section (1212, 2212, 3212), wherein corresponding baffle elements (1220, 1230, 1240, 2220, 2230, 3220, 3230, 3250) are provided on a surface of the sheet element (1210, 2210, 3210) in this conical section (1212, 2212, 3212).

5. The parting sheet according to claim 4, wherein the sheet element (1210) comprises a first surface and a second surface opposite to the corresponding first surface;
wherein in the cylindrical section (1211) of the sheet element (1210), the corresponding baffle elements (1220) are provided on the first surface of the sheet element (1210) and on the second surface of the sheet element (1210) each inclined by a predetermined first angle (1221) towards the sheet element;
wherein in the conical section (1212) of the sheet element (1210), the corresponding baffle elements (1220) are provided on the first surface of the sheet element (1210) each inclined by the predetermined first angle (1221) towards the sheet element; and
wherein in the conical section (1212) of the sheet element (1210), the corresponding baffle elements (1230) are provided on the second surface of the sheet element (1210) each inclined by a predetermined second angle (1231).

6. The parting sheet according to claim 4 or 5, wherein a thickness of the corresponding baffle elements (2220) provided on the surface of the sheet element (2210) in the cylindrical section (2211) is larger than a thickness of the corresponding baffle elements (2230) provided on the surface of the sheet element (2210) in the conical section (2212).

7. The parting sheet according to any one of the preceding claims, wherein the predetermined position and/or the predetermined angle of each baffle element (1220, 1230, 1240, 2220, 2230, 3220, 3230, 3250) are determined in order to influence a flow property of the cooling fluid (3410) flowing in the cavity (2120, 2120, 3120) in a predetermined manner, in particular in order to influence a velocity of the cooling fluid (3410) flowing in the cavity (1120, 2120, 3120) in a predetermined manner.

8. The parting sheet according to claim 7, wherein the predetermined position and/or the predetermined angle of each baffle element (1220, 1230, 1240, 2220, 2230, 3220, 3230, 3250) are predetermined such that a velocity of the cooling fluid (3410) flowing in the cavity (1120, 2120, 3120) increases towards a front end (3213) of the sheet element (1210, 2210, 3210).

9. The parting sheet according to any one of the preceding claims, wherein at least one baffle element of the number of baffle elements is provided as a guiding and/or supporting element (1240, 3250) at a predetermined guiding and/or supporting position on the surface of the sheet element (1210, 3210) inclined by a predetermined guiding and/or supporting angle towards the sheet element (1210, 3210).

10. The parting sheet according to claim 9,
wherein the respective predetermined guiding and/or supporting position corresponds to a reversal position of fluid flow reversal in the cavity (3120), particularly to a position at a front end (3213) of the sheet element (3210); and/or
wherein the respective predetermined guiding and/or supporting angle is determined in order to influence a flow property of the cooling fluid (3310, 3320) flowing in the cavity (3120), in particular a velocity of the cooling fluid (3310, 3320) flowing in the cavity (3120), in a predetermined manner; and/or
wherein the respective guiding and/or support element (3250) is provided as a support structure for manufacturing the parting sheet (3200) in the cavity (3120) inside the wall (3110) of the burner (3000); and/or
wherein the at respective guiding and/or supporting element (1240) is provided in order to position the parting sheet (1200) in the cavity (1120) relative to the wall (1110) of the burner (1000).

11. The parting sheet according to any one of the preceding claims, wherein the parting sheet (1200, 2200, 3200) is manufactured from one several of the following materials:
stainless steel 1.4571;
alloy 699 XA;
alloy 602 CA;
alloy 718;
alloy 690 XA.

12. A burner (1000, 2000, 3000) comprising a wall (1110, 2110, 3110) and a parting sheet (1200, 2200, 3200) according to any one of the preceding claims, wherein a cavity (1120, 2120, 3120) is provided inside the wall (1110, 2110, 3110) for flowing a cooling fluid through the wall of the burner, wherein the parting sheet (1200) comprising the baffle elements (1220, 1230, 1240) is arranged in the cavity (1120) inside the wall (1110) of the burner (1000) with a predetermined distance to the wall (1110) of the burner (1000) or wherein the parting sheet (2200, 3200) comprising the baffle elements (2220, 2230, 3220, 3230, 3250) is manufactured in the cavity (2120, 3120) inside the wall (2110, 3110) of the burner (2000, 3000).

13. A method for manufacturing a parting sheet (1200, 2200, 3200) according to any one of the claims 1 to 11 comprising a sheet element (1210, 2210, 3210) and a number of baffle elements (1220, 1230, 1240, 2220, 2230, 3220, 3230, 3250), the method comprising the steps of:
manufacturing the sheet element (1210, 2210, 3210), particularly by means of an additive manufacturing process, and
manufacturing the number of baffle elements (1220, 1230, 1240, 2220, 2230, 3220, 3230, 3250), particularly by means of the additive manufacturing process, wherein each of these baffle elements (1220, 1230, 1240, 2220, 2230, 3220, 3230, 3250) is manufactured at a predetermined position on a surface of the sheet element (1210, 2210, 3210) inclined by a predetermined angle (1221, 1231) towards the sheet element.

14. The method according to claim 13, further comprising:
performing a fluid flow analysis, especially comprising a computational fluid dynamics (CFD) analysis and/or a finite element (FE) analysis, in order to determine the number, the positions and the angles (1221, 1231) of the baffle elements (1220, 1230, 1240, 2220, 2230, 3220, 3230, 3250).

15. A method for manufacturing a burner (1000, 2000, 3000), comprising the steps of:
providing a wall (1110) with a cavity (1120) for flowing a cooling fluid through the wall (1110);
manufacturing a parting sheet (1200) according to a method of claim 13 or 14; and
arranging the parting sheet (1200) comprising the baffle elements (1220, 1230, 1240) in the cavity (1120) inside the wall (1110) of the burner (1000) with a predetermined distance to the wall (1110) of the burner (1000);
or comprising the steps of:
manufacturing a wall (2110, 3110) with a cavity (2120, 3120) for flowing a cooling fluid through the wall (2110, 3110), particularly by means of an additive manufacturing process; and
manufacturing a parting sheet (2200, 3200) in the cavity (2120, 3120) according to a method of claim 13 or 14.
